# EUROPEAN PATENT APPLICATION

(11) **EP 0 881 793 A2**
(43) Date of publication of application: **02.12.1998**
(21) Application number: 98109744.7
(22) Date of filing: 28.05.1998
(51) Int. Cl.: H04H 1/02, H04R 27/00

(54) **Video player and display device for use in aircraft entertainment systems**

(30) Priority: 28.05.1997 US 864596
(71) Applicant: ROCKWELL INTERNATIONAL CORPORATION, Costa Mesa, CA 92628-5090 (US)
(72) Inventor: Ho, Kesse, (US); Le, Joseph H., (US)
(74) Representative: Wagner, Karl H., Dipl.-Ing.

(57) **Abstract**

The disclosure describes a video player and display device for use in an aircraft entertainment system. The video display is incorporated into the face panel of the video player. The video output of the player is provided to its output terminals and to its face-panel monitor, thereby allowing a user to more easily utilize the video player's full functionality in the context of an aircraft IFE system. For example, if the video player is capable of performing automated timed play operations, the video player can more easily be programmed to start and/or stop at a particular time because programming of the player can be carried out in conjunction with the face-panel display screen. Also, it is easy to determine whether system malfunctions are in the video player by checking the monitor output. Where several video machines are concurrently playing different video choices, the flight attendant can easily confirm that the correct video is playing in the correct machine without having to actually go into the cabin and look at what is being displayed on the passenger terminal screens. The disclosed video player and monitor can also be provided with diagnostic circuitry that checks basic device parameters and/or operations, and displays the results of these checks on the display for easy viewing and consideration.

## Description

### BACKGROUND OF THE INVENTION

### (a) Field of the Invention

The present invention relates generally to aircraft entertainments systems. More particularly, it relates to a video player and display device for use in aircraft entertainment systems.

### (b) Description of Related Art

Aircrafts typically include some form of electronic distribution system for controlling and coordinating the distribution throughout the aircraft of electronic communications such as seat lighting commands, attendant call commands, audio announcements, and audio/video entertainment signals. In many recently developed systems, data communications such as video game software or menus of the available aircraft services may also be distributed.

A typical aircraft communication system includes a headend area, a signal distribution network, and a plurality of peripheral stations consisting primarily of passenger seat stations or terminals. In general, the headend is located at the front of the aircraft cabin, and provides, inter alia, a central location for the assembly of the entertainment related signals/services that are transmitted to passenger terminals via the aircraft communication system. Where the communication signals relate to entertainment services, the aircraft communication system is often referred to as an in-flight entertainment (IFE) system.

A typical headend of an IFE system includes sources for video and related audio, audio unrelated to the video, and entertainment data such as game software and/or menu data. The audio source can include radio broadcasts, audio tape players (digital and analog), compact disk (CD) players, and other similar devices, The video source can include conventional video tape players (digital and analog), conventional video disk players, and other similar devices. The data source can be a conventional hard or floppy disk storage medium and a conventional computer. Because aircraft weight is always a consideration, the total number of the above-references audio, video and data source devices is typically kept to a minimum.

One of the problems associated with IFE systems of the type described above is that it can be difficult to troubleshoot the system components when one of them malfunctions. Because of aircraft space considerations, the IFE headend components are typically arranged in a fairly compact area that does not allow for easy disassembly of the various audio, video and data source components.

A particularly difficult IFE component to troubleshoot is the video tape/disk player component. If the IFE goes down, it is difficult to know whether the malfunction is in the video player, the distribution network, or the passenger seat terminal. Also, where several video machines are concurrently playing different video choices, the flight attendant cannot confirm that the correct tape is playing in the correct machine without actually going into the cabin and looking at the passenger terminal screens. Tapping a conventional television monitor into the video player output would allow the operation of the video machine to be monitored at the headend, but would also add considerable extra weight to the aircraft and take up considerable extra space, particularly where multiple video players are being utilized.

Accordingly, there is a need for developing a video player machine that allows its performance to be easily monitored in an IFE systems without adding significant weight and/or space to the IFE system.

### SUMMARY OF THE INVENTION

The present invention is embodied in a video player and display device for use in an aircraft entertainment system. In a preferred embodiment of the device, a conventional video player unit is modified to incorporate a video display on its face panel. The size of the display is chosen to fit within the available space on the face panel of a conventional video player. Preferably the face panel controls (power, forward fast, rewind, play, stop, etc.) are arranged such that the display can be isolated in one area of the face panel. When the video player of the present invention is incorporated into a conventional aircraft IFE system, it is typically housed with other IFE components in a relatively compact area that exposes only the face panel of the video player. Because the video player's monitor, according to the present invention, is small enough to fit on the existing area of the face panel, it adds little weight to the IFE system, and requires no additional space. The video/audio output of the video player is provided to its output terminals and to its face-panel monitor.

Accordingly, the face-panel monitor of the present invention allows the video player to more easily utilize its functionality in the context of an aircraft IFE system. For example, if the video player is capable of performing automated timed play operations, the video player can more easily be programmed to start and/or stop at a particular time when programming can be carried out in conjunction with a display screen. Also, if the IFE goes down, it is easy to determine whether the malfunction is in the video player by checking the monitor output. Where several video machines are concurrently playing different video choices, the flight attendant can easily confirm that the correct video is playing in the correct machine without having to actually go into the cabin and look at what is being displayed on the passenger terminal screens.

The video player and monitor of the present invention can also be provided with diagnostic circuitry that checks basic device parameters and/or operations, and displays the results of these checks on the display for easy viewing and consideration.

The invention itself, together with further objects and attendant advantages, will best be understood by reference to the following detailed description, taken in conjunction with the accompanying drawings.

### BRIEF DESCRIPTION OF THE DRAWINGS

FIG. 1 is a diagram of an aircraft electronic distribution system capable utilizing the present invention.

FIG. 2 is a diagram of a portion of the headend area of the system shown in FIG. 1. The headend incorporates a video player and face-panel monitor embodying the present invention.

FIG. 3 is a block diagram of the video player and face-panel monitor shown in FIG 2.

### DESCRIPTION OF THE PREFERRED EMBODIMENTS

The present invention is embodied in a video player and display device for use in an aircraft entertainment system. In a preferred embodiment of the device, a conventional video player unit is modified to incorporate a video display on its face panel. The size of the display is chosen to fit within the available space on the face panel of a conventional video player. Preferably the face panel controls (power, forward fast, rewind, play, stop, etc.) are arranged such that the display can be isolated in one area of the face panel. When the video player of the present invention is incorporated into a conventional aircraft IFE system, it is typically housed with other IFE components in a relatively compact area that exposes only the face panel of the video player. Because the video player's monitor, according to the present invention, is small enough to fit on the existing area of the face panel, it adds little weight to the IFE system, and requires no additional space. The video/audio output of the video player is provided to its output terminals and to its face-panel monitor.

Accordingly, the face-panel monitor of the present invention allows the video player to more easily utilize its functionality in the context of an aircraft IFE system. For example, if the video player is capable of performing automated timed play operations, the video player can more easily be programmed to start and/or stop at a particular time when programming can be carried out in conjunction with a display screen. Also, if the IFE goes down, it is easy to determine whether the malfunction is in the video player by checking the monitor output. Where several video machines are concurrently playing different video choices, the flight attendant can easily confirm that the correct video is playing in the correct machine without having to actually go into the cabin and look at what is being displayed on the passenger terminal screens.

The video player and monitor of the present invention can also be provided with diagnostic circuitry that checks basic device parameters and/or operations, and displays the results of these checks on the display for easy viewing and consideration.

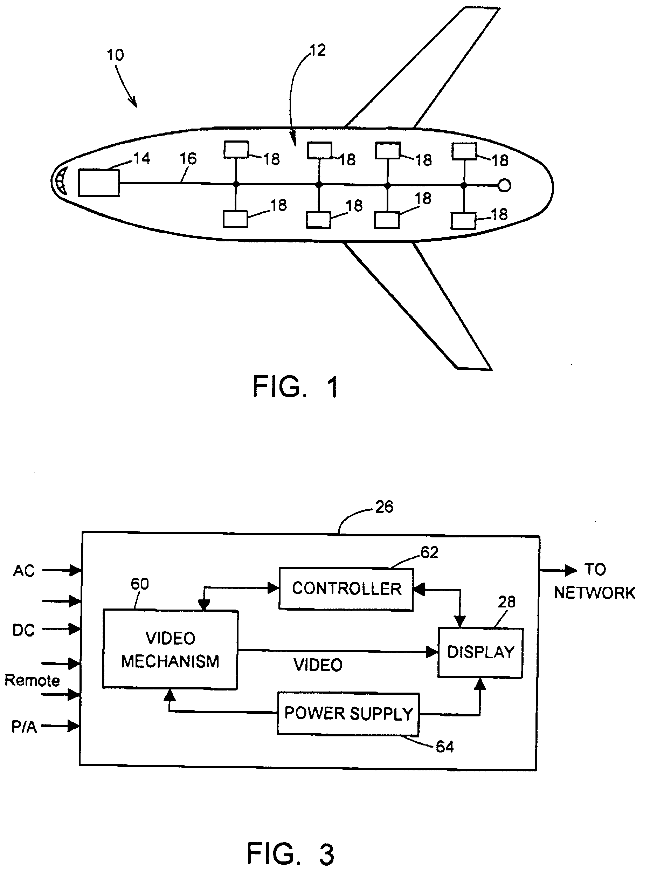

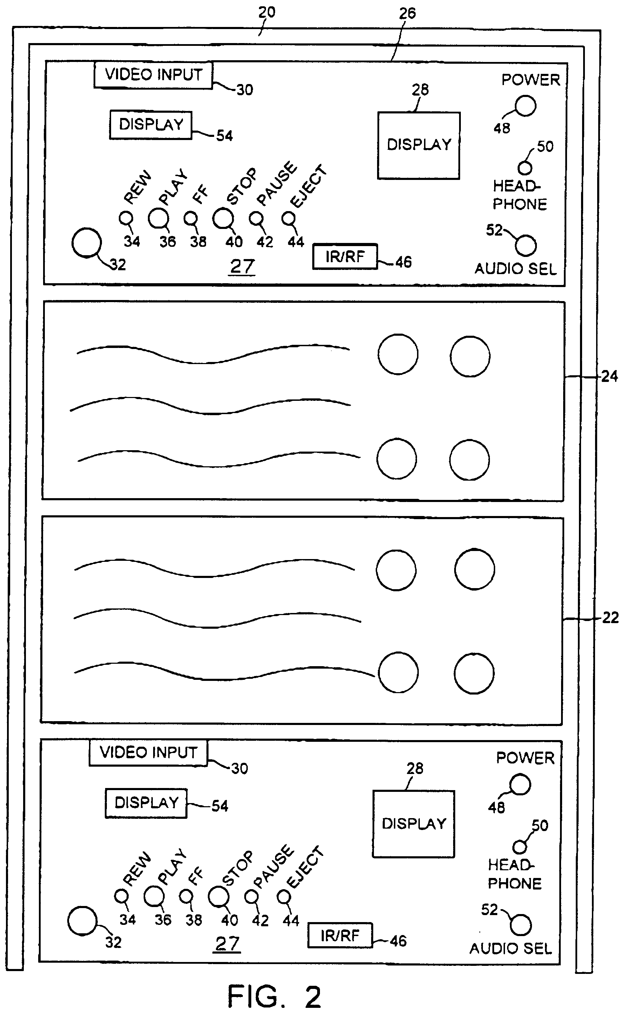

Turning now to the figures, FIG. 1 illustrates an aircraft electronic distribution system capable utilizing the present invention; FIG. 2 is a diagram of a portion of the headend area of the system shown in FIG. 1, wherein the headend incorporates a video player and face-panel monitor embodying the present invention; and FIG. 3 is a block diagram of the video player and face-panel monitor shown in FIG 2.

As shown in FIG. 1, an aircraft 10 incorporates an aircraft electronic signal distribution system 12. Aircrafts typically include some form of electronic distribution system for controlling and coordinating the distribution throughout the aircraft of electronic communications such as seat lighting commands, attendant call commands, audio announcements, and audio/video entertainment signals. In many recently developed systems, data communications such as video game software or menus of the available aircraft services may also be distributed.

The aircraft communication system 12 includes a headend area 14, a signal distribution network 16, and a plurality of peripherals 18 consisting primarily of passenger seat stations or terminals. In general, the headend 14 is located at the front of the aircraft cabin, and provides, inter alia, a central location for the assembly of the entertainment related signals/services that are transmitted to the passenger terminals 18 via the aircraft communication system 12. Where the communication signals relate to entertainment services, the aircraft communication system 12 is often referred to as an in-flight entertainment (IFE) system 12.

A typical headend 14 of an IFE system 12 includes sources for video and related audio, audio unrelated to the video, and entertainment data such as game software and/or menu data. The audio source can include radio broadcasts, audio tape players (digital and analog), compact disk (CD) players, and other similar devices. The video source can include conventional video tape players (digital and analog), conventional video disk players, and other similar devices. The data source can be a conventional hard or floppy disk storage medium and a conventional computer. Because aircraft weight is always a consideration, the total number of the above-references audio, video and data source devices is typically kept to a minimum.

FIG. 2 is a diagram of a portion 20 of the headend area 14 of the system 12 shown in FIG. 1, wherein the headend 14 incorporates a video player 26 and face-panel display 28 embodying the present invention. The illustrated portion 20 of the headend area 14 preferably takes the form of a housing 20 chat incorporates a variety of headend equipment 22, 24, 26. The headend equipment 22, 24, 26 may be arranged within the housing 20 in a variety of configurations. Preferably, the headend equipment 22, 24, 26 is stacked on top of one another such that only the face panels of the various headend equipment is exposed for access by an operator or flight attendant.

The headend equipment 22, 24 can take a variety of forms, for example they could be sources for video and related audio, audio unrelated to the video, and entertainment data such as game software and/or menu data. The audio source can include radio broadcasts, audio tape players (digital and analog), compact disk (CD) players, and other similar devices. The video source can include conventional video tape players (digital and analog), conventional video disk players, and other similar devices. The data source can be a conventional hard or floppy disk storage medium and a conventional computer.

The video player 26 and video display 28 includes a front panel 27 on which the display is mounted, a video source input 30, speakers 32, a rewind control 34, a play control 36, a forward fast control 38, a stop control 40, a pause control 42, an eject control 44, an infra-red (IR) and/or radio-frequency (RF) receiver 46, a power control 48, a headphone input 50, an audio selection control 52, and a conventional alphanumeric display 54.

The video player 26 can take a variety of forms including analog tape, digital tape, or video disk. The display 28 can also take a variety of forms including liquid crystal display (LCD), cathode ray tube (CRT), plasma, and others. The display 28 can incorporate touch controls that perform the rewind, play, forward fast, stop, pause, eject and other functions.

FIG. 3 is a block diagram of the video player 26 and face-panel display 28 shown in FIG 2. In general, the video player 26 includes a play mechanism 60 coupled to the display 28. A controller 62 is connected to the play mechanism 60 and the display 28, and a power supply 64 is connected to the play mechanism 60 and the display 28. The video player 26 generally includes inputs for AC, DC, remote control signals, and P/A ("public address") control signals. The P/A control signals allow the audio output of the video player 26 to be overridden in favor of cabin P/A announcements.

The controller 62 provides conventional control functions found in a video player device. For example, the controller 62 may implement scheduled play operations using an internal clock to automatically activate the video play mechanism 60 at a predetermined time. The controller 60 may also incorporate general diagnostic operations that tests various important operations of the video player 26 and determines whether they are operating properly. Accordingly, in addition to allowing the user to monitor the video output from the video player 26 to the communication network 16, the display 28 also facilitates the use of other video player functions such as the above-described scheduled play operations and diagnostic functions. The display 28 could provide prompts via displayed text communications that walk the user through the scheduling operations in a similar fashion to the way on-screen displays on a conventional television are used to walk a user through the steps for programming a conventional video cassette recorder. The display 28 could also display the results of whatever diagnostic tests are performed by the controller 60.

Thus, based on the foregoing descriptions and illustrations, it can be seen that the present invention provides several advantages. The size of the face-panel display 28 is chosen to fit within the available space on the face panel 27 of a conventional video player. Preferably the face panel controls (power, forward fast, rewind, play, stop, etc.) are arranged such that the display can be isolated in one area of the face panel. When the video player of the present invention is incorporated into a conventional aircraft IFE system, it is typically housed with other IFE components in a relatively compact area that exposes only the face panel of the video player. Because the video player's display, according to the present invention, is small enough to fit on the existing area of the face panel, it adds little weight to the IFE system, and requires no additional space. The video/audio output of the video player is provided to its output terminals and to its face-panel monitor.

Accordingly, the face-panel monitor of the present invention allows the video player to more easily utilize its functionality in the context of an aircraft IFE system. For example, if the video player is capable of performing automated timed play operations, the video player can more easily be programmed to start and/or stop at a particular time when programming can be carried out in conjunction with a display screen. Also, if the IFE malfunctions, it is easy to determine whether the malfunction is in the video player by checking the monitor output. Where several video machines are concurrently playing different video choices, the flight attendant can easily confirm that the correct video is playing in the correct machine without having to actually go into the cabin and look at what is being displayed on the passenger terminal screens.

The video player and monitor of the present invention can also be provided with diagnostic circuitry that checks basic device parameters and/or operations, and displays the results of these checks on the display for easy viewing and consideration.

Of course, it should be understood that a range of changes and modifications can be made to the preferred embodiment described above. For example, the present invention is described in connection with a particular hardware and processing structure for transmitting and receiving video/audio and related data in an aircraft IFE system. However, a wide variety of transmitting and receiving structures could be utilized as long as the essential distribution features described herein in connection with aircraft flight are present. It is therefore intended that the foregoing detailed description be regarded as illustrative rather than limiting and that it be understood that it is the following claims, including all equivalents, which are intended to define the scope of this invention.

It should be noted that the objects and advantages of the invention may be attained by means of any compatible combination(s) particularly pointed out in the items of the following summary of the invention and the appended claims.
1. An in flight entertainment system for use on a passenger aircraft, the system comprising:
   headend equipment located at a headend area of the aircraft;
   a signal distribution network in communication with said headend equipment, said network extending from said headend area throughout a passenger area of the aircraft; and
   a plurality of passenger seat terminals in communication with said network, said passenger seat terminals located at passenger seats of the aircraft;
   said headend equipment comprising a video player having a display on a face-panel of said video player.
2. The system wherein said video player provides video output to said network and said display.
3. The system wherein:
   said video player is provided in a housing containing said video player and other of said headend equipment arranged such that at least said front panel of said video player is exposed; and
   said front panel includes said display, an opening for inserting a video source medium into said video player, a stop control, a play control, a rewind control and a forward fast control.
4. The system wherein:
   said video player is provided in a housing containing said video player and other of said headend equipment arranged such that at least said front panel of said video player is exposed; and
   said front panel includes said display, an opening for inserting a video source medium into said video player, and means for receiving control signals including stop controls, play controls, rewind controls and forward fast controls.
5. The system wherein said video player comprises diagnostic circuitry.
6. The system wherein said diagnostic circuitry is in communication with various components of said video player and said display.
7. The system wherein said diagnostic circuitry provides video signals to said display representing the results of diagnostic analysis performed on said various components of said video player.
8. The system wherein:
   said video player is provided in a housing containing said video player and other of said headend equipment arranged such that at least said front panel of said video player is exposed; and
   said front panel includes said display, an opening for inserting a video source medium into said video player, means for receiving control commands including stop, play, rewind and forward fast, and means for receiving commands that activate and control said diagnostic circuitry.
9. The system wherein:
   said system further comprises a remote control; and
   said means for receiving control commands comprises an RF receiver for receiving commands from said remote control.
10. The system wherein:
   said system further comprises a remote control; and
   said means for receiving control commands comprises an IR receiver for receiving commands from said remote control.
11. The system wherein said means for receiving control commands comprises a touch screen control of said display.
12. The system wherein said video player comprises a video tape player.
13. The system wherein said video tape player comprises a digital video tape player.
14. The system wherein said video player comprises a video disk player.
15. The system wherein said display comprises a LCD.
16. The system wherein said display comprises a CRT.
17. The system wherein said display comprises a plasma display.
18. The system wherein said video player comprises means for programming said video player.
19. The system wherein said means for programming is in communication with said display.
20. The system wherein said means for programming provides video signals to said display representing instructions on how to program said video player.

## Claims

1. An in flight entertainment system for use on a passenger aircraft, the system comprising;
headend equipment located at a headend area of the aircraft;
a signal distribution network in communication with said headend equipment, said network extending from said headend area throughout a passenger area of the aircraft; and
a plurality of passenger seat terminals in communication with said network, said passenger seat terminals located at passenger seats of the aircraft;
said headend equipment comprising a video player having a display on a face-panel of said video player.

2. The system of claim 1 wherein said video player provides video output to said network and said display.

3. The system of claim 1 wherein:
said video player is provided in a housing containing said video player and other of said headend equipment arranged such that at least said front panel of said video player is exposed; and
said front panel includes said display, an opening for inserting a video source medium into said video player, a stop control, a play control, a rewind control and a forward fast control.

4. The system of claim 1 wherein:
said video player is provided in a housing containing said video player and other of said headend equipment arranged such that at least said front panel of said video player is exposed; and
said front panel includes said display, an opening for inserting a video source medium into said video player, and means for receiving control signals including stop controls, play controls, rewind controls and forward fast controls.

5. The system of claim 1 wherein said video player comprises diagnostic circuitry.

6. The system of claim 5 wherein said diagnostic circuitry is in communication with various components of said video player and said display.

7. The system of claim 6 wherein said diagnostic circuitry provides video signals to said display representing the results of diagnostic analysis performed on said various components of said video player.

8. The system of claim 7 wherein:
said video player is provided in a housing containing said video player and other of said headend equipment arranged such that at least said front panel of said video player is exposed; and
said front panel includes said display, an opening for inserting a video source medium into said video player, means for receiving control commands including stop, play, rewind and forward fast, and means for receiving commands that activate and control said diagnostic circuitry.

9. The system of claim 8 wherein;
said system further comprises a remote control; and
said means for receiving control commands comprises an RF receiver for receiving commands from said remote control,
wherein preferably
said system further comprises a remote control; and
said means for receiving control commands comprises an IR receiver for receiving commands from said remote control,
wherein preferably said means for receiving control commands comprises a touch screen control of said display,
wherein preferably said video player comprises a video tape player,
wherein preferably said video tape player comprises a digital video tape player,
and wherein preferably said video player comprises a video disk player.

10. The system of claim 1 wherein said display comprises a LCD,
wherein preferably said display comprises a CRT,
wherein preferably said display comprises a plasma display,
wherein preferably said video player comprises means for programming said video player,
wherein preferably said means for programming is in communication with said display, and
wherein preferably said means for programming provides video signals to said display representing instructions on how to program said video player.
